# EUROPEAN PATENT SPECIFICATION

(11) **EP 4 108 535 B1**
(45) Date of publication and mention of the grant of the patent: **06.12.2023**
(21) Application number: 22178427.5
(22) Date of filing: 10.06.2022
(51) Int. Cl.: B60W 40/06, B60W 50/14, B60W 40/09

(54) **PROCESSING DEVICE, MOTORCYCLE, AND PROCESSING METHOD**
VERARBEITUNGSVORRICHTUNG, MOTORRAD UND VERARBEITUNGSVERFAHREN
DISPOSITIF DE TRAITEMENT, MOTOCYCLETTE, ET PROCÉDÉ DE TRAITEMENT

(30) Priority: 23.06.2021 JP 2021104394
(43) Date of publication of application: 28.12.2022
(73) Proprietor: Robert Bosch GmbH, 70442 Stuttgart (DE)
(72) Inventor: Fukuzawa, Keiichiro, Tsuzuki-ku, Yokohama-shi, Kanagawa, 2248501 (JP)

(56) References cited:
- EP-A2- 2 828 781
- DE-A1-102018 213 303
- US-A1- 2020 391 559

## Description

### BACKGROUND OF THE INVENTION

### 1. Field of the Invention

The present invention relates to a processing device mounted to a motorcycle, a motorcycle including the processing device, and a processing method that is used in a motorcycle.

### 2. Description of the Background Art

A behavior of motorcycles during traveling is more susceptible to a road surface in comparison to an automatic four-wheeled vehicle. Therefore, information on whether or the road surface is wet is extremely useful for the motorcycles. Accordingly, it is suggested that motorcycles in the related art are provided with a raindrop sensor that directly detects rain and determines wetness of a road surface on the basis of an output of the raindrop sensor (for example, refer to JP-A-2018-118569).

Patent literature DE 10 2018 213303 A1 provides a method for recognizing a roadway condition in the area of a two-wheeler.

### SUMMARY OF THE INVENTION

It is necessary for the motorcycles in the related art to include a raindrop sensor that directly detects rain in order to determine wetness of a road surface. Therefore, there is a problem that the motorcycles in the related art which are capable of determining the wetness of the road surface are expensive.

The invention has been made in consideration of the above-described problem, and an object thereof is to obtain a processing device that is mounted to motorcycles, can determine wetness of a road surface, and can reduce the cost of the motorcycles. In addition, another object of the invention is to obtain a motorcycle including the processing device. In addition, still another object of the invention is to obtain a processing method that is used in motorcycles, can determine wetness of a road surface, and can reduce the cost of the motorcycles.

According to the present invention, a processing device that is mounted to a motorcycle is provided as defined by independent claim 1. The processing device includes: an acquisition unit that acquires a traveling characteristic of the motorcycle on the basis of an output from an inertial measurement sensor that is used for control of a behavior of the motorcycle; and a determination unit that compares the traveling characteristic acquired by the acquisition unit and reference data to determine wetness of a road surface. The acquisition unit is configured to acquire the traveling characteristic on the basis of yaw information of the motorcycle which is output from the inertial measurement sensor.

In addition, according to another aspect of the invention, there is provided a motorcycle including the processing device according to the invention.

In addition, according to the present invention, a processing method that is used in a motorcycle is provided as defined by independent claim 12. The processing method includes: an acquisition step of acquiring a traveling characteristic of the motorcycle on the basis of an output from an inertial measurement sensor that is used for control of a behavior of the motorcycle; and a determination step of comparing the traveling characteristic acquired in the acquisition step and reference data to determine wetness of a road surface. In the acquisition step, the traveling characteristic is acquired on the basis of yaw information of the motorcycle which is output from the inertial measurement sensor.

A motorcycle of which a behavior is controlled includes an inertial measurement sensor, and thus the behavior control is performed on the basis of an output from the inertial measurement sensor. Here, the invention can determine wetness of a road surface on the basis of the output from the inertial measurement sensor that is used for control of the behavior of the motorcycle. Accordingly, when employing the invention in a motorcycle of which a behavior is controlled, it is possible to reduce the cost of the motorcycle capable of determining the wetness of the road surface.

### BRIEF DESCRIPTION OF THE DRAWINGS

Fig. 1 is a side view of a motorcycle according to an embodiment of the invention;
Fig. 2 is a block diagram illustrating a processing device according to the embodiment of the invention;
Fig. 3 is a view illustrating an example of a road-surface-wetness determination method that is performed by a determination unit of the processing device according to the embodiment of the invention;
Fig. 4 is a view illustrating an example of the road-surface-wetness determination method that is performed by the determination unit of the processing device according to the embodiment of the invention;
Fig. 5 is a view illustrating a suitable period when the determination unit of the processing device according to the embodiment of the invention determines wetness of a road surface;
Fig. 6 is a view illustrating a control flow of an example of an operation of the processing device according to the embodiment of the invention;
Fig. 7 is a block diagram illustrating a modification example of the processing device according to the embodiment of the invention;
Fig. 8 is a block diagram illustrating another modification example of the processing device according to the embodiment of the invention;
Fig. 9 is a side view of a motorcycle including the processing device illustrated in Fig. 8; and
Fig. 10 is a block diagram illustrating still another modification example of the processing device according to the embodiment of the invention.

### DETAILED DESCRIPTION OF THE INVENTION

Hereinafter, a processing device, a motorcycle, and a processing method according to the invention will be described with reference to the accompanying drawings.

Note that, a configuration, an operation, and the like which are described below are examples of the invention, and the invention is not limited to the configuration, the operation, and the like.

For example, an automatic two-wheeled vehicle is exemplified below as a motorcycle. However, the motorcycle is not limited to the automatic two-wheeled vehicle. The motorcycle represents an automatic two-wheeled vehicle or an automatic three-wheeled vehicle among straddle-type vehicles on which a rider straddles. The motorcycle includes an automatic two-wheeled vehicle or an automatic three-wheeled vehicle that uses an engine as a propulsion source, and an automatic two-wheeled vehicle or an automatic three-wheeled vehicle that uses a motor as the propulsion source. Examples of the motorcycle include a motorbike, a scooter, an electric scooter, and the like.

In addition, in the following description, the same or similar description is appropriately simplified or omitted. In addition, in the respective drawings, a reference numeral is not given to the same or similar member or part, or the same reference numeral will be given thereto. In addition, illustration of a fine structure is appropriately simplified or omitted.

### Embodiment

Hereinafter, description will be given of a processing device according to an embodiment, a motorcycle including the processing device, and a processing method according to the embodiment.

### <Configuration of Motorcycle and Processing Device>

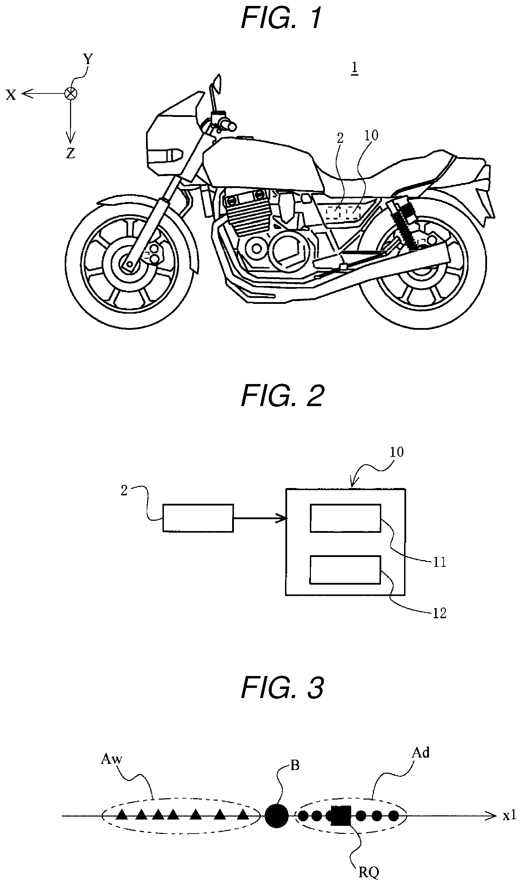

Fig. 1 is a side view of a motorcycle according to an embodiment of the invention. Note that, a Z-axis illustrated in Fig. 1 is an axis in a vertical direction of a vehicle body of a motorcycle 1. An X-axis illustrated in Fig. 1 is an axis in a straight-ahead direction of the motorcycle 1. In addition, a Y-axis illustrated in Fig. 1 is an axis that is orthogonal to the vehicle body of the motorcycle 1, and is orthogonal to the X-axis and the Z-axis.

The motorcycle 1 includes an inertial measurement sensor 2, and a processing device 10. In other words, the inertial measurement sensor 2 and the processing device 10 are mounted to the motorcycle 1.

The inertial measurement sensor 2 detects acceleration of three axes and angular velocities of three axes (roll, pitch, and yaw) in the motorcycle 1. Specifically, the inertial measurement sensor 2 detects, for example, acceleration in the X-axis direction, the Y-axis direction, and the Z-axis direction. In addition, for example, the inertial measurement sensor 2 detects angular velocity around the X-axis as the roll angular velocity, detects angular velocity around the Y-axis as the pitch angular velocity, and detects angular velocity around the Z-axis as the yaw angular velocity. Note that, the inertial measurement sensor 2 may be configured to detect other physical quantities which can be substantially converted into the acceleration of three axes and the angular velocities of three axes in the motorcycle 1. In addition, the inertial measurement sensor 2 may be configured to detect a part of the acceleration of three axes and the angular velocities of three axes.

The inertial measurement sensor 2 is used for control of a behavior of the motorcycle 1. In other words, the behavior of the motorcycle 1 is controlled by a control device (not illustrated) on the basis of an output from the inertial measurement sensor 2. Note that, in the related art, as a specific method of controlling the behavior of motorcycles, various methods are suggested. The method of controlling the behavior of the motorcycle 1 by using the control device (not illustrated) is not particularly limited, and various methods which have been suggested in the related art can be employed.

The processing device 10 determines wetness of a road surface on the basis of the output from the inertial measurement sensor 2. For example, a part or the entirety of the processing device 10 is constituted by a microcomputer, a microprocessor unit, and the like. In addition, for example, a part or the entirety of the processing device 10 may be constituted by firmware that can be updated, or may be a program module or the like that is executed by a command from a CPU or the like. For example, the processing device 10 may be one piece, or may be divided into a plurality of pieces. In addition, at least a part of the processing device 10 may be integrated with at least a part of the above-described control device (not illustrated). For example, the processing device 10 may be configured as follows.

Fig. 2 is a block diagram illustrating the processing device according to the embodiment of the invention.

The processing device 10 according to this embodiment includes an acquisition unit 11 and a determination unit 12 as a functional unit.

The acquisition unit 11 is a functional unit that acquires a traveling characteristic of the motorcycle 1 on the basis of the output from the inertial measurement sensor 2. The traveling characteristic is a vector in which at least one among a physical quantity output from the inertial measurement sensor 2 (or a physical quantity converted from the physical quantity), a Mahalanobis distance to be described later, and the like is set as an axis. In other words, the traveling characteristic may be coordinates of a graph in which at least one among the physical quantity output from the inertial measurement sensor 2 (or a physical quantity converted from the physical quantity), the Mahalanobis distance to be described later, and the like is set as an axis. Note that, in the following description, a vector in which at least one physical quantity among physical quantities output from the inertial measurement sensor 2 (or physical quantities converted from the physical quantities) is set as an axis will be referred to as "traveling state information". Here, examples of the physical quantities output from the inertial measurement sensor 2 (or physical quantities converted from the physical quantities) include each acceleration of the three axes, a roll angular velocity, a roll angle (an integral value of a roll angular velocity), a yaw angular velocity, a yaw angle (an integral value of a yaw angular velocity), a pitch angular velocity, and a pitch angle (an integral value of a pitch angular velocity), and the like. Note that, in the following description, among the physical quantities, physical quantities in a roll direction such as the roll angular velocity and the roll angle may be collectively referred to as "roll information". In addition, in the following description, among the physical quantities, physical quantities in a yaw direction such as the yaw angular velocity and the yaw angle may be collectively referred to as "yaw information". For example, the acquisition unit 11 acquires a value of a physical quantity that becomes an axis of a traveling characteristic at certain time. According to this, the acquisition unit 11 can acquire a traveling characteristic at certain time.

The determination unit 12 is a functional unit that compares the traveling characteristic acquired from the acquisition unit 11 and reference data to determine wetness of a road surface. For example, the determination unit 12 determines the wetness of the road surface as follows.

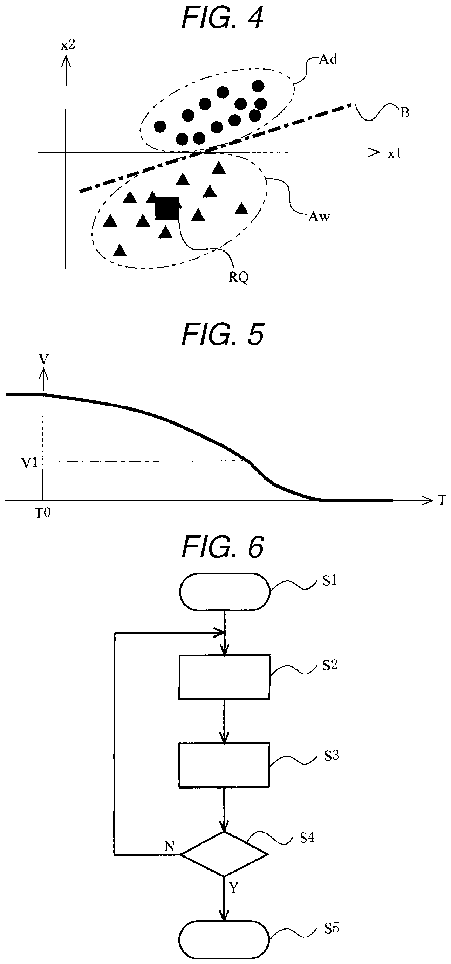

Fig. 3 and Fig. 4 are views illustrating an example of a road-surface-wetness determination method that is executed by the determination unit of the processing device according to the embodiment of the invention.

Fig. 3 illustrates a traveling characteristic that is a vector in which one physical quantity x1 among physical quantities output from the inertial measurement sensor 2 is set as an axis as the travelling characteristic of the motorcycle 1 which is acquired by the acquisition unit 11. A black square illustrated in Fig. 3 represents a traveling characteristic RQ of the motorcycle 1 at certain time. Since the traveling characteristic RQ illustrated in Fig. 3 is a vector in which a physical quantity output from the inertial measurement sensor 2 is set as an axis, it can be said that the traveling characteristic RQ represents traveling state information of the motorcycle 1 at certain time. Here, Fig. 3 illustrates a reference sample group of a vector in which a physical quantity x1 in a reference sample group of traveling state information of the motorcycle 1 is set as an axis. The reference sample group is a set of a plurality of reference samples. In addition, a reference sample is traveling state information of the motorcycle 1 which is acquired in a state in which whether or not a road surface is wet is known. Note that, small black circles illustrated in Fig. 3 are reference samples when the road surface is not wet. In addition, black triangles illustrated in Fig. 3 are reference samples when the road surface is wet.

The behavior of the motorcycle 1 is different depending on whether or not the road surface is wet. That is, a physical quantity indicating traveling state information of the motorcycle 1 is different depending on whether or not the road surface is wet. According to this, a region Ad where a reference sample group when the road surface is not wet exists, and a region Aw where a reference sample group when the road surface is wet exists are present at positions different from each other. Note that, the region Ad and the region Aw may partially overlap depending on the kind of the physical quantity.

Here, for example, the determination unit 12 can determine wetness of the road surface by setting the above-described reference sample group as reference data, in other words, by setting the region Ad and the region Aw as reference data. Specifically, it is assumed that the traveling characteristic RQ of the motorcycle 1 at certain time exists in the region Ad. In this case, the determination unit 12 can determine that the road surface is not wet at certain time when the traveling characteristic RQ is acquired. In addition, it is assumed that the traveling characteristic RQ of the motorcycle 1 at certain time exists in the region Aw. In this case, the determination unit 12 can determine that the road surface is wet at certain time when the traveling characteristic RQ is acquired.

In addition, for example, a boundary B that distinguishes the reference sample group when the road surface is not wet and the reference sample group when the road surface is wet may be set to the reference data. In other words, the boundary B that distinguishes the traveling characteristic of the motorcycle 1 when the road surface is not wet and the traveling characteristic of the motorcycle 1 when the road surface is wet may be set to the reference data. In addition, the determination unit 12 may be configured to determine wetness of the road surface on the basis of the boundary B. Specifically, it is assumed that the traveling characteristic RQ of the motorcycle 1 at certain time exists on a traveling characteristic side of the motorcycle 1 when the road surface is not wet with the boundary B set as a reference. In this case, the determination unit 12 can determine that the road surface is not wet at certain time when the traveling characteristic RQ is acquired. In addition, it is assumed that the traveling characteristic RQ of the motorcycle 1 at certain time exists on a traveling characteristic side of the motorcycle 1 when the road surface is wet with the boundary B set as a reference. In this case, the determination unit 12 can determine that the road surface is wet at certain time when the traveling characteristic RQ is acquired. Note that, as illustrated in Fig. 3, in a case where the acquisition unit 11 acquires a traveling characteristic that is a vector in which the one physical quantity x1 is set as an axis, the boundary B becomes a boundary point.

Fig. 4 illustrates a traveling characteristic that is a vector in which two physical quantities x1 and x2 among physical quantities output from the inertial measurement sensor 2 are set as axes as a traveling characteristic of the motorcycle 1 which is acquired by the acquisition unit 11. A black square illustrated in Fig. 4 represents the traveling characteristic RQ of the motorcycle 1 at certain time. Since the traveling characteristic RQ illustrated in Fig. 4 is a vector in which physical quantities output from the inertial measurement sensor 2 are set as axes, it can be said that the traveling characteristic RQ represents traveling state information of the motorcycle 1 at certain time. In addition, Fig. 4 illustrates a reference sample group of a vector in which the physical quantities x1 and x2 are set as axes. Note that, small black circles illustrated in Fig. 4 are reference samples when the road surface is not wet. In addition, black triangles illustrated in Fig. 4 are reference samples when the road surface is wet.

Even in a case where the acquisition unit 11 acquires the traveling characteristic that is a vector in which the two physical quantities x1 and x2 are set as axes, the determination unit 12 can determine wetness of the road surface by comparing the traveling characteristics acquired by the acquisition unit 11 and reference data in a similar manner as described above. For example, the determination unit 12 can determine wetness of the road surface by setting the reference sample group illustrated in Fig. 4 as reference data, in other words, by setting the region Ad and the region Aw illustrated in Fig. 4 as reference data. Specifically, it is assumed that the traveling characteristic RQ of the motorcycle 1 at certain time exists in the region Ad. In this case, the determination unit 12 can determine that the road surface is not wet at certain time when the traveling characteristic RQ is acquired. In addition, it is assumed that the traveling characteristic RQ of the motorcycle 1 at certain time exists in the region Aw. In this case, the determination unit 12 can determine that the road surface is wet at certain time when the traveling characteristic RQ is acquired.

In addition, even in a case where the acquisition unit 11 acquires a traveling characteristic that becomes the vector in which the two physical quantities x1 and x2 are set as axes, the boundary B that distinguishes the reference sample group when the road surface is not wet and the reference sample group when the road surface is wet may be set to the reference data. In other words, the boundary B that distinguishes the traveling characteristic of the motorcycle 1 when the road surface is not wet and the traveling characteristic of the motorcycle 1 when the road surface is wet may be set to the reference data. Even in a case where the acquisition unit 11 acquires the traveling characteristic that is a vector in which the two physical quantities x1 and x2 are set as axes, the determination unit 12 can determine wetness of the road surface on the basis of the boundary B in a similar manner as described above.

Specifically, it is assumed that the traveling characteristic RQ of the motorcycle 1 at certain time exists on a traveling characteristic side of the motorcycle 1 when the road surface is not wet with the boundary B set as a reference. In this case, the determination unit 12 can determine that the road surface is not wet at certain time when the traveling characteristic RQ is acquired. In addition, it is assumed that the traveling characteristic RQ of the motorcycle 1 at certain time exists on a traveling characteristic side of the motorcycle 1 when the road surface is wet with the boundary B set as a reference. In this case, the determination unit 12 can determine that the road surface is wet at certain time when the traveling characteristic RQ is acquired. Note that, as illustrated in Fig. 4, in a case where the acquisition unit 11 acquires a traveling characteristic that is a vector in which the two physical quantities x1 and x2 are set as axes, the boundary B becomes a boundary line. The boundary line may be a straight line or a line (a curve, a bent line, or the like) other than the straight line.

Note that, in Fig. 3 and Fig. 4, the reference sample group when the road surface is not wet and the reference sample group when the road surface is wet do not overlap each other. However, even when the reference sample group when the road surface is not wet and the reference sample group when the road surface is wet overlap each other, the boundary B can be set to the reference data by a method such as support vector machine.

In addition, in Fig. 3 and Fig. 4, description has been given of the road-surface-wetness determination method executed by the determination unit 12 with reference to a traveling characteristic that is a vector in which two or less physical quantities are set as axes as an example. The acquisition unit 11 may acquire a traveling characteristic that is a vector in which three or more physical quantities are set as axes without limitation to the example. In addition, for example, the determination unit 12 may determine wetness of a road surface as described above on the basis of the traveling characteristic. As the physical quantity used for determination of wetness of a road surface increases, determination accuracy on wetness of a road surface in the determination unit 12 is improved. On the other hand, as the physical quantity used for determination of wetness of a road surface decreases, a processing quantity of the processing device 10 decreases, and thus the cost of the processing device 10 can be reduced.

Here, it is preferable that at least one axis of the traveling characteristic is a physical quantity of at least one of roll information and yaw information. In other words, it is preferable that the acquisition unit 11 acquires the traveling characteristic on the basis of the roll information of the motorcycle 1 which is output from the inertial measurement sensor 2. In addition, the acquisition unit 11 acquires the traveling characteristic on the basis of the yaw information of the motorcycle 1 which is output from the inertial measurement sensor 2. A great difference is likely to occur in a turning behavior of the motorcycle 1 between a state in which the road surface is wet and a state in which the road surface is not wet. Specifically, in the state in which the road surface is wet, a driver of the motorcycle 1 is likely to perform gentle turning to suppress slipping or the like in the motorcycle 1 in comparison to the state in which the road surface is not wet, and an inclination of the motorcycle 1 is likely to decrease. According to this, a difference is likely to occur in a value of the roll information and the yaw information between the state in which the road surface is wet and the state in which the road surface is not wet. Accordingly, when acquiring the traveling characteristic on the basis of at least one of the roll information and the yaw information of the motorcycle 1, determination accuracy on wetness of the road surface in the determination unit 12 is improved.

By the way, the acquisition unit 11 may acquire a distance with respect to a reference sample group of traveling state information of the motorcycle 1, which is output from the inertial measurement sensor 2, and may acquire the traveling characteristic of the motorcycle 1 on the basis of the distance. In other words, the distance between the traveling state information of the motorcycle 1 which is output from the inertial measurement sensor 2 and reference sample group may be acquired, and the traveling characteristic of the motorcycle 1 may be acquired on the basis of the distance. That is, the distance may be used as one axis of the traveling characteristic. For example, it is assumed that the acquisition unit 11 acquires the distance between the traveling state information of the motorcycle 1 which is output from the inertial measurement sensor 2, and the reference sample group when the road surface is not wet. In this case, as the distance is larger, the possibility that the road surface is wet further increases. In addition, as the distance is smaller, the possibility that the road surface is not wet increases. Accordingly, the distance can be used as one axis of the traveling characteristic. Note that, when acquiring the distance, the acquisition unit 11 may acquire the distance on the basis of a calculation formula that is stored, or may acquire the distance by using a table in which parameters in the calculation formula and the distance are associated with each other.

As the distance between the traveling state information of the motorcycle 1 which is output from the inertial measurement sensor 2 and the reference sample group, it is considered to use a Euclidean distance, a Mahalanobis distance, or the like. At this time, as the distance between the traveling state information of the motorcycle 1 which is output from the inertial measurement sensor 2 and the reference sample group, it is preferable to use the Mahalanobis distance. For example, the reason for this is as follows. In Fig. 3 and Fig. 4, focus will be given to a reference sample group when the road surface is not wet and a reference sample group when the road surface is wet. In the reference sample group, respective reference samples are not evenly dispersed from the center of the reference sample group (or an average of the respective reference samples), and are widely dispersed in one direction. In this case, even when the distance between the traveling state information of the motorcycle 1 and the center of the reference sample group is the same, the traveling state information may exist inside the reference sample group or outside of the reference sample group. Therefore, the Euclidean distance may not be suitable as one axis of the traveling characteristic depending on a dispersion method of the respective reference samples of the reference sample group. On the other hand, the Mahalanobis distance represents a distance from the reference sample group, and becomes large as being spaced apart from the reference sample group. According to this, it is preferable to use the Mahalanobis distance as the distance between the traveling state information of the motorcycle 1 which is output from the inertial measurement sensor 2 and the reference sample group.

In addition, in a case where the acquisition unit 11 acquires the traveling characteristic of the motorcycle 1 on the basis of the Mahalanobis distance, it is preferable that the reference sample group that is used for acquisition of the Mahalanobis distance is a reference sample group of the traveling state information of the motorcycle 1 when the road surface is not wet. For example, as an example of usage of the determination result of the determination unit 12, it is considered that the determination result of the determination unit 12 is used for control of the behavior of the motorcycle 1. In this case, when determining that the road surface is wet, the behavior of the motorcycle 1 is controlled so that a fluctuation becomes gentler in comparison to when determining the road surface is not wet. At this time, it is assumed that the traveling state information of the motorcycle 1 which is output form the inertial measurement sensor 2 is spaced apart from the reference sample group when the road surface is not wet and the reference sample group when the road surface is wet due to a certain influence. In this case, when the acquisition unit 11 is configured to acquire the traveling characteristic of the motorcycle 1 on the basis of the reference sample group of the traveling state information of the motorcycle 1 when the road surface is not wet, the determination unit 12 determines that the road surface is wet. According to this, the behavior of the motorcycle 1 is controlled so that the fluctuation in the behavior of the motorcycle 1 becomes gentle. According to this, when the acquisition unit 11 is configured to acquire the traveling characteristic of the motorcycle 1 on the basis of the reference sample group of the traveling state information of the motorcycle 1 when the road surface is not wet, safety of the motorcycle 1 is improved.

Fig. 5 is a view illustrating a suitable period when the determination unit of the processing device according to the embodiment of the invention determines wetness of a road surface. Note that, the horizontal axis in Fig. 5 represents time. In addition, the vertical axis in Fig. 5 represents a vehicle speed of the motorcycle 1. That is, Fig. 5 illustrates a state in which the motorcycle 1 decelerates from time T0.

In the state in which the road surface is wet, a driver of the motorcycle 1 tends to gently decelerate the motorcycle 1 so as to suppress slipping or the like in the motorcycle 1 in comparison to the state in which the road surface is not wet. According to this, a difference is likely to occur in the behavior during deceleration of the motorcycle 1 between the state in which the road surface is wet and the state in which the road surface is not wet. That is, a difference is likely to occur in a value of a physical quantity output from the inertial measurement sensor 2 (or a physical quantity converted from the physical quantity) during deceleration of the motorcycle 1 between the state in which the road surface is wet and the state in which the road surface is not wet. According to this, timing at which the determination unit 12 determines wetness of the road surface is not particularly limited, but it is preferable that the determination unit 12 is configured to determine wetness of the road surface on the basis of an output from the inertial measurement sensor 2 when the motorcycle 1 is decelerating. According to this, determination accuracy on the wetness of the road surface in the determination unit 12 is improved. For example, in a case where the motorcycle 1 shows a behavior illustrated in Fig. 5, it is preferable that the determination unit 12 determines the wetness of the road surface after the time T0.

Note that, the configuration in which the determination unit 12 determines deceleration of the motorcycle 1 is not particularly limited. For example, the determination unit 12 can determine deceleration of the motorcycle 1 on the basis of a situation in which the motorcycle 1 is braked, a situation in which a throttle opening of the motorcycle 1 is reduced, a situation in which a vehicle speed of the motorcycle 1 is slow, or the like. In addition, the configuration in which the determination unit 12 acquires the vehicle speed of the motorcycle 1 is not particularly limited. For example, the determination unit 12 may acquire the vehicle speed on the basis of other physical quantities (a wheel speed, position information in GPS, or the like) which can be substantially converted into the vehicle speed without limitation to the configuration of acquiring the vehicle speed itself of the motorcycle 1.

In addition, in a case where the vehicle speed of the motorcycle 1 is slow, a difference in the behavior of the motorcycle 1 between the state in which the road surface is wet and the state in which the road surface is not wet decreases. That is, in a case where the vehicle speed of the motorcycle 1 is slow, a difference in a physical quantity (or a physical quantity converted from the physical quantity) output from the inertial measurement sensor 2 between the state in which road surface is wet and the state in which the road surface is not wet decreases. Accordingly, it is preferable that the determination unit 12 determines wetness of the road surface on the basis of an output from the inertial measurement sensor 2 when the motorcycle 1 is at a specified speed or higher. According to this, it is possible to suppress erroneous determination on the wetness of the road surface in the determination unit 12, and determination accuracy on the wetness of the road surface in the determination unit 12 is improved. For example, in a case where the motorcycle 1 shows the behavior illustrated in Fig. 5, it is preferable that the determination unit 12 determines the wetness of the road surface on the basis of an output from the inertial measurement sensor 2 when the vehicle speed of the motorcycle 1 is at the specified speed V1 or higher. Here, the effect is obtained without limitation to a case where road-surface-wetness determination initiation timing in the determination unit 12 is in deceleration of the motorcycle 1.

Note that, there is no particular limitation to a determination configuration by the determination unit 12 on whether or not the motorcycle 1 is at the specified speed or higher. For example, the determination unit 12 may determine whether or not the motorcycle 1 is at the specified speed or higher on the basis of the vehicle speed of the motorcycle 1 or other physical quantities which can be substantially converted into the vehicle speed. In addition, for example, the determination unit 12 may determine whether or not the motorcycle 1 is at the specified speed or higher on the basis of time elapsed from deceleration initiation of the motorcycle 1.

### <Operation of Processing Device>

Description will be given of an operation of the processing device 10 according to the embodiment.

Fig. 6 is a view illustrating a control flow of an example of the operation of the processing device according to the embodiment of the invention.

In a case where a control initiation condition is established, in step S1, the processing device 10 initiates control illustrated in Fig. 6. For example, the control initiation condition represents when the motorcycle 1 initiates deceleration. In this embodiment, the determination unit 12 determines whether or not the initiation condition is established. Step S2 is an acquisition step. In step S2, the acquisition unit 11 of the processing device 10 acquires the traveling characteristic of the motorcycle 1 on the basis of an output form the inertial measurement sensor 2 that is used for control of the behavior of the motorcycle 1. Note that, the acquisition unit 11 may periodically repeat the operation of acquiring the traveling characteristic of the motorcycle 1 on the basis of the output from the inertial measurement sensor 2 before the control initiation condition is established.

Step S3 subsequent to step S2 is a determination step. In step S3, the determination unit 12 of the processing device 10 compares the traveling characteristic acquired in the acquisition step and the reference data to determine the wetness of the road surface. Step S4 subsequent to step S3 is a termination determination step. In step S4, the processing device 10 determines whether or not a control termination condition is established. For example, the control termination condition represents when the motorcycle 1 is slower than the specified speed. In this embodiment, the determination unit 12 determines whether or not the termination condition is established. In a case where the control termination condition is established, the processing device 10 proceeds to step S5, and terminates the control illustrated in Fig. 6. On the other hand, in a case where the control termination condition is not established, the processing device 10 repeats from step S2 to step S4.

### <Effect of Processing Device>

The processing device 10 is a processing device that is mounted to the motorcycle 1. The processing device 10 includes the acquisition unit 11 and the determination unit 12. The acquisition unit 11 is configured to acquire the traveling characteristic of the motorcycle 1 on the basis of the output from the inertial measurement sensor 2 that is used in control of the behavior of the motorcycle 1. The determination unit 12 is configured to compare the traveling characteristic acquired by the acquisition unit 11 and the reference data to determine the wetness of the road surface.

It is necessary for a motorcycle in the related art to include a raindrop sensor that directly detects rain in order to determine the wetness of the road surface. Therefore, the motorcycle in the related art which can determine the wetness of the road surface is expensive. On the other hand, the processing device 10 according to this embodiment can determine the wetness of the road surface on the basis of the output from the inertial measurement sensor 2. Here, in the related art, a motorcycle of which a behavior is controlled includes an inertial measurement sensor that is used in control of the behavior of the motorcycle. Accordingly, when employing the motorcycle 1 of which a behavior is controlled as a motorcycle capable of determining the wetness of the road surface, it is possible to reduce the cost of the motorcycle 1.

### <Modification Example>

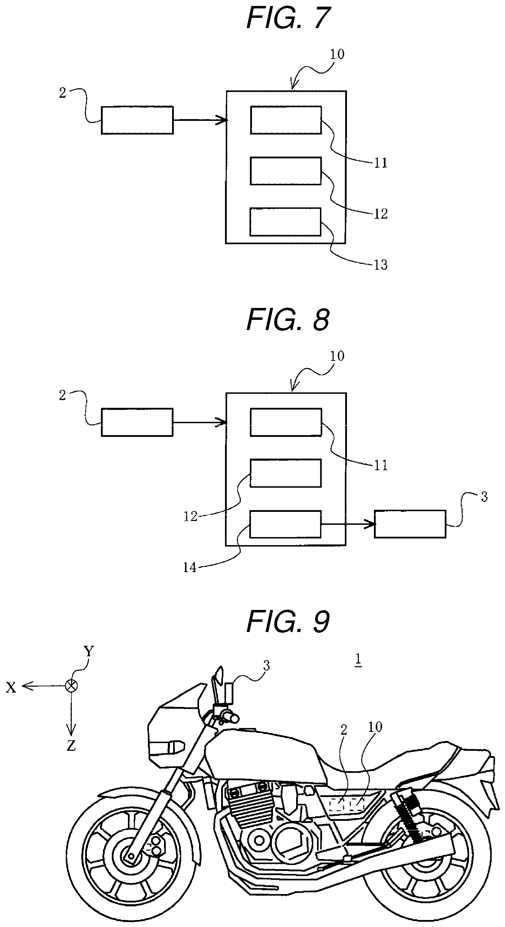

Fig. 7 is a block diagram illustrating a modification example of the processing device according to the embodiment of the invention.

The processing device 10 illustrated in Fig. 7 includes a control unit 13 in addition to the configuration illustrated in Fig. 2. The control unit 13 is a functional unit that uses the determination result in the determination unit 12 for control of the behavior of the motorcycle 1. The control unit 13 may be a part of the configuration of the above-described control device (not illustrated) that controls the behavior of the motorcycle 1 on the basis of the output from the inertial measurement sensor 2, or may be a configuration different from the configuration of the control device.

The processing device 10 configured as in Fig. 7 can reflect whether or not the road surface is wet in the control of the behavior of the motorcycle 1. For example, when it is determined that the road surface is wet, the control unit 13 can control the behavior of the motorcycle 1 so that a fluctuation in the behavior of the motorcycle 1 becomes gentler in comparison to when it is determined that the road surface is not wet. Specifically, for example, the control unit 13 can control the fluctuation of the behavior of the motorcycle 1 to be gentle by controlling torque, a throttle opening, or the like of the motorcycle 1. Accordingly, when the processing device 10 is configured as in Fig. 7, safety of the motorcycle 1 provided with the processing device 10 is improved.

Fig. 8 is a block diagram illustrating another modification example of the processing device according to the embodiment of the invention. In addition, Fig. 9 is a side view of a motorcycle provided with the processing device illustrated in Fig. 8.

The motorcycle 1 illustrated in Fig. 9 includes a display device 3 that is an example of a notification device.

The processing device 10 illustrated in Fig. 8 includes a notifying operation execution unit 14 in addition to the configuration illustrated in Fig. 2. The notifying operation execution unit 14 is a functional unit that outputs a signal for notifying a notification device of the determination result in the determination unit 12. Specific examples of notification contents include whether or not the road surface is wet. As described above, in the motorcycle 1 illustrated in Fig. 9, the display device 3 is used as the notification device. Accordingly, in the motorcycle 1 illustrated in Fig. 9, the notifying operation execution unit 14 outputs a signal that causes the display device 3 to display the determination result in the determination unit 12. According to this, the determination result in the determination unit 12 is displayed on the display device 3.

Note that, the notification device is not limited to the display device 3. For example, a speaker provided in the motorcycle 1 may be used as the notification device, and the determination result in the determination unit 12 may be given in notification with sound. In this case, the notifying operation execution unit 14 outputs a notification signal to the notification device to emit a sound indicating the determination result in the determination unit 12. In addition, the notification device that has received the notification signal output from the notifying operation execution unit 14 is not limited to the configuration provided in the motorcycle 1. An equipment that accompanies the motorcycle 1 such as a helmet and gloves worn by the driver of the motorcycle 1 may be used. That is, the notifying operation execution unit 14 may output the notification signal to the equipment that accompanies the motorcycle 1, and the equipment may give a notification.

The processing device 10 configured as in Fig. 8 can cause the driver of the motorcycle 1 to recognize whether or not the road surface is wet. According to this, when the processing device 10 is configured as in Fig. 8, safety of the motorcycle 1 provided with the processing device 10 is improved. Note that, the processing device 10 illustrated in Fig. 8 may include the control unit 13 illustrated in Fig. 7.

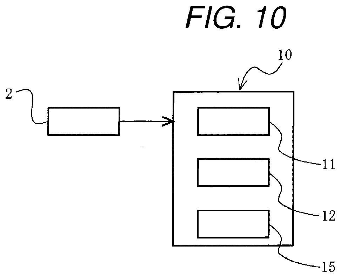

Fig. 10 is a block diagram illustrating still another modification example of the processing device according to the embodiment of the invention.

The processing device 10 illustrated in Fig. 10 includes a storage unit 15 in addition to the configuration illustrated in Fig. 2. The storage unit 15 is a functional unit that stores the determination result in the determination unit 12. When the processing device 10 is configured as in Fig. 10, the determination result in the determination unit 12 can be used in post analysis on driver's driving, function determination, and the like. According to this, when the processing device 10 is configured as in Fig. 10, convenience of the processing device 10 is improved. Note that, the processing device 10 illustrated in Fig. 10 may include the control unit 13 illustrated in Fig. 7, or may include the notifying operation execution unit 14 illustrated in Fig. 8.

Hereinbefore, description has been given of the processing device 10 according to this embodiment, but the processing device according to the invention is not limited to description in the embodiment, and only a part of this embodiment may be executed.

## Claims

1. A processing device (10) for a motorcycle (1), comprising:
an acquisition unit (11) that acquires a traveling characteristic of the motorcycle (1) on the basis of an output from an inertial measurement sensor (2) that is used for control of a behavior of the motorcycle (1); and
a determination unit (12) that compares the traveling characteristic acquired by the acquisition unit (11) and reference data to determine wetness of a road surface,
**characterized in that**
the acquisition unit (11) is configured to acquire the traveling characteristic on the basis of yaw information of the motorcycle (1) which is output from the inertial measurement sensor (2).

2. The processing device (10) according to claim 1, wherein the acquisition unit (11) is configured to acquire the traveling characteristic on the basis of roll information of the motorcycle (1) which is output from the inertial measurement sensor (2).

3. The processing device (10) according to claim 1 or 2,
wherein the acquisition unit (11) is configured to acquire a Mahalanobis distance with respect to a reference sample group of traveling state information of the motorcycle (1) which is output from the inertial measurement sensor (2), and to acquire the traveling characteristic on the basis of the Mahalanobis distance.

4. The processing device (10) according to claim 3,
wherein the reference sample group is a reference sample group of the traveling state information when the road surface is not wet.

5. The processing device (10) according to any one of claims 1 to 4,
wherein a boundary (B) that distinguishes the traveling characteristic when the road surface is not wet and the traveling characteristic when the road surface is wet is set in the reference data, and
the determination unit (12) is configured to determine the wetness of the road surface on the basis of the boundary (B) .

6. The processing device (10) according to any one of claims 1 to 5,
wherein the determination unit (12) is configured to determine the wetness of the road surface on the basis of an output from the inertial measurement sensor (2) when the motorcycle (1) is decelerating.

7. The processing device (10) according to any one of claims 1 to 6,
wherein the determination unit (12) is configured to determine the wetness of the road surface on the basis of an output from the inertial measurement sensor (2) when the motorcycle (1) is at a specified speed (V1) or higher.

8. The processing device (10) according to any one of claims 1 to 7, further comprising:
a control unit (13) that uses a determination result in the determination unit (12) for control of the behavior of the motorcycle (1).

9. The processing device (10) according to any one of claims 1 to 8, further comprising:
a notifying operation execution unit (14) that outputs a signal for causing a notification device (3) to notify a determination result in the determination unit (12).

10. The processing device (10) according to any one of claims 1 to 9, further comprising:
a storage unit (15) that stores a determination result in the determination unit (12).

11. A motorcycle (1) comprising:
the processing device (10) according to any one of claims 1 to 10; and
the inertial measurement sensor (2) that is used for control of a behavior of the motorcycle (1).

12. A processing method for a motorcycle (1), that processing method comprising:
an acquisition step (S2) of acquiring a traveling characteristic of the motorcycle (1) on the basis of an output from an inertial measurement sensor (2) that is used for control of a behavior of the motorcycle (1); and
a determination step (S3) of comparing the traveling characteristic acquired in the acquisition step (S2) and reference data to determine wetness of a road surface,
**characterized in that**,
in the acquisition step (S2), the traveling characteristic is acquired on the basis of yaw information of the motorcycle (1) which is output from the inertial measurement sensor (2).

## Patentansprüche

1. Verarbeitungsvorrichtung (10) für ein Kraftrad (1), umfassend:
eine Erfassungseinheit (11), die eine Fahrcharakteristik des Kraftrads (1) auf Basis einer Ausgabe von einem inertialen Messsensor (2) erfasst, der zur Steuerung eines Verhaltens des Kraftrads (1) verwendet wird; und
eine Bestimmungseinheit (12), die die durch die Erfassungseinheit (11) erfasste Fahrcharakteristik und Referenzdaten vergleicht, um eine Nässe einer Straßenoberfläche zu bestimmen, **dadurch gekennzeichnet, dass**
die Erfassungseinheit (11) zu Folgendem konfiguriert ist Erfassen der Fahrcharakteristik auf Basis einer Gierinformation des Kraftrads (1), die von dem inertialen Messsensor (2) ausgegeben wird.

2. Verarbeitungsvorrichtung (10) nach Anspruch 1, wobei die Erfassungseinheit (11) dazu konfiguriert ist, die Fahrcharakteristik auf Basis einer Rollinformation des Kraftrads (1) zu erfassen, die von dem inertialen Messsensor (2) ausgegeben wird.

3. Verarbeitungsvorrichtung (10) nach Anspruch 1 oder 2,
wobei die Erfassungseinheit (11) dazu konfiguriert ist, eine Mahalanobis-Distanz in Bezug auf eine Referenzprobengruppe einer Fahrzustandsinformation des Kraftrads (1) zu erfassen, die von dem inertialen Messsensor (2) ausgegeben wird, und die Fahrcharakteristik auf Basis der Mahalanobis-Distanz zu erfassen.

4. Verarbeitungsvorrichtung (10) nach Anspruch 3, wobei die Referenzprobengruppe eine Referenzprobengruppe der Fahrzustandsinformation ist, wenn die Straßenoberfläche nicht nass ist.

5. Verarbeitungsvorrichtung (10) nach einem der Ansprüche 1 bis 4,
wobei eine Grenze (B), die die Fahrcharakteristik, wenn die Straßenoberfläche nicht nass ist, und die Fahrcharakteristik, wenn die Straßenoberfläche nass ist, differenziert, in den Referenzdaten festgelegt ist, und die Bestimmungseinheit (12) dazu konfiguriert ist, die Nässe der Straßenoberfläche auf Basis der Grenze (B) zu bestimmen.

6. Verarbeitungsvorrichtung (10) nach einem der Ansprüche 1 bis 5,
wobei die Bestimmungseinheit (12) dazu konfiguriert ist, die Nässe der Straßenoberfläche auf Basis einer Ausgabe von dem inertialen Messsensor (2) zu bestimmen, wenn das Kraftrad (1) abbremst.

7. Verarbeitungsvorrichtung (10) nach einem der Ansprüche 1 bis 6,
wobei die Bestimmungseinheit (12) dazu konfiguriert ist, die Nässe der Straßenoberfläche auf Basis einer Ausgabe von dem inertialen Messsensor (2) zu bestimmen, wenn sich das Kraftrad (1) bei einer vorgegebenen Geschwindigkeit (V1) oder höher befindet.

8. Verarbeitungsvorrichtung (10) nach einem der Ansprüche 1 bis 7, ferner umfassend:
eine Steuereinheit (13), die ein Bestimmungsergebnis in der Bestimmungseinheit (12) zur Steuerung des Verhaltens des Kraftrads (1) verwendet.

9. Verarbeitungsvorrichtung (10) nach einem der Ansprüche 1 bis 8, ferner umfassend:
eine Benachrichtigungsvorgangsausführungseinheit (14), die ein Signal ausgibt, um eine Benachrichtigungsvorrichtung (3) zum Benachrichtigen eines Bestimmungsergebnisses in der Bestimmungseinheit (12) zu veranlassen.

10. Verarbeitungsvorrichtung (10) nach einem der Ansprüche 1 bis 9, ferner umfassend:
eine Speichereinheit (15), die ein Bestimmungsergebnis in der Bestimmungseinheit (12) speichert.

11. Kraftrad (1), umfassend:
die Verarbeitungsvorrichtung (10) nach einem der Ansprüche 1 bis 10; und
den inertialen Messsensor (2), der zur Steuerung eines Verhaltens des Kraftrads (1) verwendet wird.

12. Verarbeitungsverfahren für ein Kraftrad (1), wobei das Verarbeitungsverfahren Folgendes umfasst:
einen Erfassungsschritt (S2) zum Erfassen einer Fahrcharakteristik des Kraftrads (1) auf Basis einer Ausgabe von einem inertialen Messsensor (2), der zur Steuerung eines Verhaltens des Kraftrads (1) verwendet wird; und
einen Bestimmungsschritt (S3) zum Vergleichen der in dem Erfassungsschritt (S2) erfassten Fahrcharakteristik und Referenzdaten, um eine Nässe einer Straßenoberfläche zu bestimmen, **dadurch gekennzeichnet, dass**,
in dem Erfassungsschritt (S2), die Fahrcharakteristik auf Basis einer Gierinformation des Kraftrads (1) erfasst wird, die von dem inertialen Messsensor (2) ausgegeben wird.

## Revendications

1. Dispositif (10) de traitement pour une motocyclette (1), comportant :
une unité (11) d'acquisition qui acquiert une caractéristique de déplacement de la motocyclette (1) sur la base d'une sortie provenant d'un capteur (2) de mesure inertielle qui est utilisé pour la commande d'un comportement de la motocyclette (1) ; et
une unité (12) de détermination qui compare la caractéristique de déplacement acquise par l'unité (11) d'acquisition et des données de référence pour déterminer la mouillure d'une surface de route, **caractérisé en ce que**
l'unité (11) d'acquisition est configurée pour acquérir la caractéristique de déplacement sur la base d'une information de lacet de la motocyclette (1) qui est délivrée à partir du capteur (2) de mesure inertielle.

2. Dispositif (10) de traitement selon la revendication 1, l'unité (11) d'acquisition étant configurée pour acquérir la caractéristique de déplacement sur la base d'une information de roulis de la motocyclette (1) qui est délivrée à partir du capteur (2) de mesure inertielle.

3. Dispositif (10) de traitement selon la revendication 1 ou 2,
l'unité (11) d'acquisition étant configurée pour acquérir une distance de Mahalanobis par rapport à un groupe d'échantillons de référence d'informations d'état de déplacement de la motocyclette (1) qui est délivré à partir du capteur (2) de mesure inertielle, et pour acquérir la caractéristique de déplacement sur la base de la distance de Mahalanobis.

4. Dispositif (10) de traitement selon la revendication 3, le groupe d'échantillons de référence étant un groupe d'échantillons de référence des informations d'état de déplacement lorsque la surface de route n'est pas mouillée.

5. Dispositif (10) de traitement selon l'une quelconque des revendications 1 à 4,
une frontière (B) qui distingue la caractéristique de déplacement lorsque la surface de route n'est pas mouillée et la caractéristique de déplacement lorsque la surface de route est mouillée étant spécifiée dans les données de référence, et
l'unité (12) de détermination étant configurée pour déterminer la mouillure de la surface de route sur la base de la frontière (B).

6. Dispositif (10) de traitement selon l'une quelconque des revendications 1 à 5,
l'unité (12) de détermination étant configurée pour déterminer la mouillure de la surface de route sur la base d'une sortie provenant du capteur (2) de mesure inertielle lorsque la motocyclette (1) décélère.

7. Dispositif (10) de traitement selon l'une quelconque des revendications 1 à 6,
l'unité (12) de détermination étant configurée pour déterminer la mouillure de la surface de route sur la base d'une sortie provenant du capteur (2) de mesure inertielle lorsque la motocyclette (1) se trouve à une vitesse spécifiée (V1) ou au-dessus.

8. Dispositif (10) de traitement selon l'une quelconque des revendications 1 à 7, comportant en outre :
une unité (13) de commande qui utilise un résultat de détermination dans l'unité (12) de détermination pour la commande du comportement de la motocyclette (1).

9. Dispositif (10) de traitement selon l'une quelconque des revendications 1 à 8, comportant en outre :
une unité (14) d'exécution d'opération de notification qui délivre un signal servant à amener un dispositif (3) de notification à notifier un résultat de détermination dans l'unité (12) de détermination.

10. Dispositif (10) de traitement selon l'une quelconque des revendications 1 à 9, comportant en outre :
une unité (15) de stockage qui stocke un résultat de détermination dans l'unité (12) de détermination.

11. Motocyclette (1) comportant :
le dispositif (10) de traitement selon l'une quelconque des revendications 1 à 10 ; et
le capteur (2) de mesure inertielle qui est utilisé pour la commande d'un comportement de la motocyclette (1).

12. Procédé de traitement pour une motocyclette (1), le procédé de traitement en question comportant :
une étape (S2) d'acquisition consistant à acquérir une caractéristique de déplacement de la motocyclette (1) sur la base d'une sortie provenant d'un capteur (2) de mesure inertielle qui est utilisé pour la commande d'un comportement de la motocyclette (1) ; et
une étape (S3) de détermination consistant à comparer la caractéristique de déplacement acquise lors de l'étape (S2) d'acquisition et des données de référence pour déterminer la mouillure d'une surface de route,
**caractérisé en ce que**
lors de l'étape (S2) d'acquisition, la caractéristique de déplacement est acquise sur la base d'une information de lacet de la motocyclette (1) qui est délivrée à partir du capteur (2) de mesure inertielle.
